# EUROPÄISCHE PATENTANMELDUNG

(11) **EP 3 281 815 A1**
(43) Veröffentlichungstag der Anmeldung: **14.02.2018**
(21) Anmeldenummer: 17182238.0
(22) Anmeldetag: 20.07.2017
(51) Int. Cl.: B60J 10/15, B60J 10/32

(54) **KRAFTFAHRZEUGDICHTUNG**

(30) Priorität: 10.08.2016 DE 202016004846 U
(71) Anmelder: REHAU AG + Co, 95111 Rehau (DE)
(72) Erfinder: Ullmann, Martin, 95145 Oberkotzau (DE); Lehmann, Rudolf, 95111 Rehau (DE); Hofmann, Klaus, 95028 Hof (DE); Bauer, Gerald, 95694 Mehlmeisel (DE)

(57) **Zusammenfassung**

Die vorliegende Erfindung bezieht sich auf eine Kraftfahrzeugdichtung (1) aufweisend einen als Profil ausgebildeten Tragkörper (2) und wenigstens ein mit dem Tragkörper (2) verbundenes Dichtungselement (3), wobei der Tragkörper (2) wenigstens einen im Querschnitt U-förmigen oder V-förmigen Klemmabschnitt (4) aufweist, und wobei der Tragkörper (2) und das Dichtungselement (3) aus polymeren Werkstoffen bestehen, wobei zumindest der Tragkörper (2) aus einem geschäumten polymeren Werkstoff besteht.

## Beschreibung

Die vorliegende Erfindung betrifft eine Kraftfahrzeugdichtung aufweisend einen als Profil ausgebildeten Tragkörper und wenigstens ein mit dem Tragkörper verbundenes Dichtungselement, wobei der Tragkörper wenigstens einen im Querschnitt U-förmigen oder V-förmigen Klemmabschnitt aufweist, und wobei der Tragkörper und das Dichtungselement aus polymeren Werkstoffen bestehen.

Derartige Kraftfahrzeugdichtungen sind aus dem Stand der Technik bekannt, wobei das Dichtungselement oder die Dichtungselemente häufig zur Verbesserung der Elastizitätseigenschaften aus einem geschäumten polymeren Werkstoff bestehen. Der Tragkörper ist hierbei aufgrund der höheren Anforderungen an die Steifigkeit des Klemmabschnittes aus einem massiven, also nicht-geschäumten Vollmaterial ausgebildet und weist zudem in der Regel eine zusätzliche Verstärkungseinlage aus einem metallischen Werkstoff auf.

Nachteilig an Kraftfahrzeugdichtungen des Stands der Technik ist der relativ hohe Werkstoffeinsatz für den Tragkörper.

Die Erfindung stellt sich daher die Aufgabe eine Kraftfahrzeugdichtung mit den eingangs beschriebenen Merkmalen anzugeben, die gegenüber dem Stand der Technik mit einem geringeren Werkstoffeinsatz herstellbar ist.

Erfindungsgemäß wird diese Aufgabe gelöst durch eine Kraftfahrzeugdichtung aufweisend einen als Profil ausgebildeten Tragkörper und wenigstens ein mit dem Tragkörper verbundenes Dichtungselement, wobei der Tragkörper wenigstens einen im Querschnitt U-förmigen oder V-förmigen Klemmabschnitt aufweist, und wobei der Tragkörper und das Dichtungselement aus polymeren Werkstoffen bestehen, wobei zumindest der Tragkörper aus einem geschäumten polymeren Werkstoff besteht. Die Ausbildung des Tragkörpers durch einen geschäumten polymeren Werkstoff bewirkt durch die Poren eine gewünschte Werkstoff- und Gewichtseinsparung bei gleichzeitig weiterhin ausreichenden Steifigkeitseigenschaften.

Der geschäumte polymere Werkstoff des Tragkörpers kann ein chemisch und/oder physikalisch geschäumter polymerer Werkstoff sein.

Der polymere Werkstoff des Tragkörpers und/oder des Dichtungselementes kann Polypropylen, Polyethylen, Polyvinylchlorid, Polystyrol, Acrylnitril-Butadien-Styrol, Polyamid und/oder ein Thermoplastisches Elastomer umfassen. Der polymere Werkstoff des Dichtungselementes kann auch einen Ethylen-Propylen-Dien-Kautschuk umfassen.

Der polymere Werkstoff des Tragkörpers kann einen steifigkeitserhöhenden anorganischen und/oder mineralischen Zuschlagsstoff, insbesondere aus Talkum und/oder Kreide und/oder Glasfasern und/oder Kohlefasern und/oder Basaltfasern und/oder Steinwolle und/oder Silicat und/oder Ruß und/oder Bariumsulfat und/oder Titanoxid und/oder Zinksulfid und/oder Zirkoniumsilicat, umfassen.

Die mittlere Dichte des Tragkörpers kann im Bereich von 0,3 g/cm³ bis 0,9 g/cm³, bevorzugt im Bereich von 0,5 g/cm³ bis 0,85 g/cm³, besonders bevorzugt im Bereich von 0,6 g/cm³ bis 0,75 g/cm³ liegen.

Bevorzugt weist der Klemmabschnitt des Tragkörpers keine Verstärkungseinlage auf.

Der Tragkörper kann eine mittlere Porengröße von 8 µm bis 90 µm, bevorzugt von 18 µm bis 70 µm aufweisen.

Der Tragkörper kann einen eingestellten Gradienten, insbesondere in Richtung zur Außenoberfläche des Tragkörpers abnehmenden Gradienten, in der Porenanzahl und/oder in der Porengröße aufweisen.

Bevorzugt ist die Außenoberfläche des Tragkörpers durch eine nicht-geschäumte und/oder porenfreie geschlossene Außenhaut gebildet. Insbesondere eine physikalische Schäumung im Zuge eines Extrusionsprozesses des Tragkörpers ermöglicht eine nicht-geschäumte und/oder porenfreie geschlossene Außenhaut.

Das Dichtungselement kann insbesondere eine Dichtlippe sein.

Der Tragkörper und das Dichtungselement können im Wege der Extrusion, insbesondere Mehrkomponenten-Extrusion hergestellt und/oder verbunden sein.

Die Kraftfahrzeugdichtung kann eine Fensterschachtabdeckung, eine Dachfugenleiste, eine Scheibeneinfassung, eine Halteschiene oder ein Fensterführungsprofil sein.

Die Erfindung betrifft ferner Verfahren zur Herstellung einer vorstehend beschriebenen Kraftfahrzeugdichtung, wobei die Kraftfahrzeugdichtung einen als Profil ausgebildeten Tragkörper und wenigstens ein mit dem Tragkörper verbundenes Dichtungselement aufweist, wobei der Tragkörper wenigstens einen im Querschnitt U-förmigen oder V-förmigen Klemmabschnitt aufweist, und wobei der Tragkörper und das Dichtungselement aus polymeren Werkstoffen bestehen, wobei zumindest der Tragkörper mittels eines Extrusionsprozesses hergestellt wird und hierzu ein polymerer Werkstoff einem oder mehreren Extrudern zugeführt wird und zur Aufschäumung dem polymeren Werkstoff ein chemisches Treibmittel zugegeben und/oder dem Extruder ein physikalisches Treibfluid, insbesondere Kohlendioxid und/oder Stickstoff zugeführt wird. Das Dichtungselement wird bevorzugt im Wege der Mehrkomponentenextrusion stoffschlüssig oder formschlüssig mit dem Tragkörper verbunden.

### Ausführungsbeispiele

Im Folgenden wird die Erfindung anhand lediglich Ausführungsbeispiele darstellender Zeichnungen erläutert. Es zeigen schematisch:
- Fig. 1: eine perspektivische Darstellung einer Kraftfahrzeugdichtung;
- Fig. 2: einen Querschnitt durch die Kraftfahrzeugdichtung gemäß Fig. 1.

In den Figuren werden gleiche oder funktionsgleiche Elemente mit den gleichen Bezugszeichen versehen.

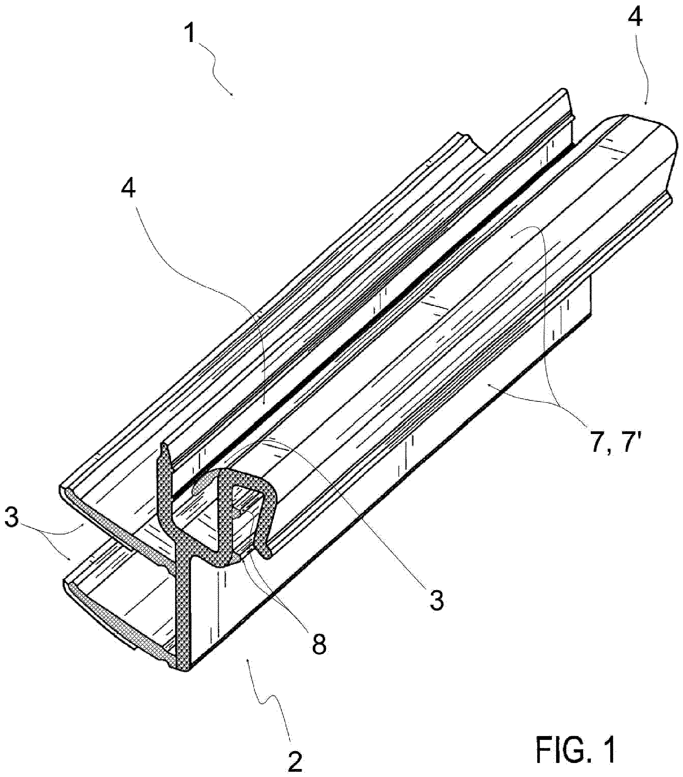

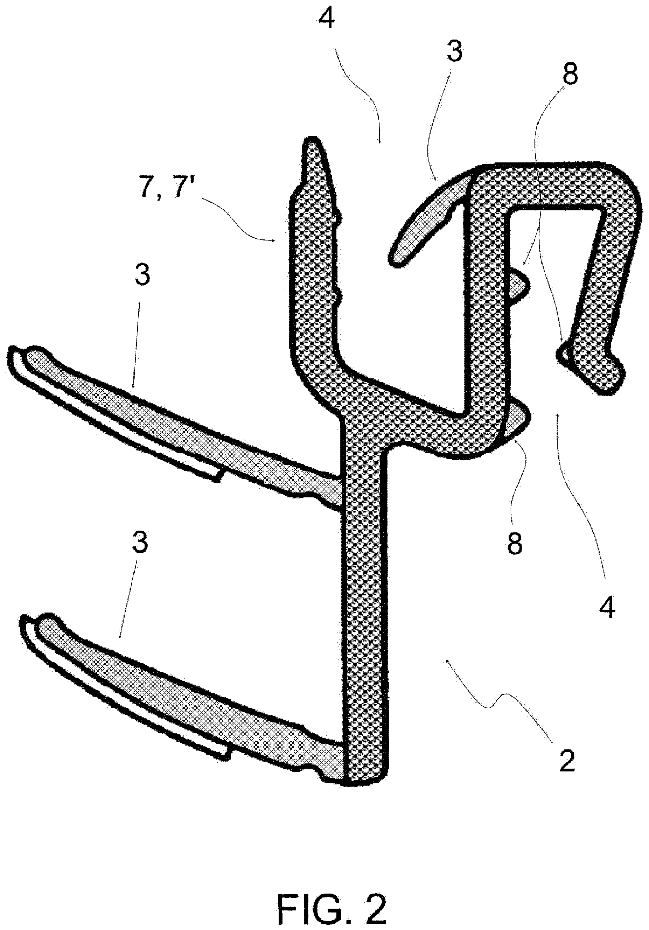

In der Fig. 1 ist eine perspektivische Darstellung einer Kraftfahrzeugdichtung 1 und in Fig. 2 ein entsprechender Querschnitt durch die Kraftfahrzeugdichtung gemäß Fig. 1 dargestellt.

Die Kraftfahrzeugdichtung 1 weist einen als Profil ausgebildeten Tragkörper 2 und wenigstens ein mit dem Tragkörper 2 verbundenes Dichtungselement 3 auf, wobei der Tragkörper 2 wenigstens einen im Querschnitt U-förmigen oder V-förmigen Klemmabschnitt 4 aufweist, und wobei der Tragkörper 2 und das Dichtungselement 3 aus polymeren Werkstoffen bestehen. Erfindungsgemäß besteht zumindest der Tragkörper 2 aus einem geschäumten polymeren Werkstoff. Der geschäumte polymere Werkstoff ist ein chemisch und/oder physikalisch geschäumter polymerer Werkstoff. Der polymere Werkstoff des Tragkörpers 2 und/oder des Dichtungselementes 3 kann Polypropylen, Polyethylen, Polyvinylchlorid, Polystyrol, Acrylnitril-Butadien-Styrol, Polyamid und/oder ein Thermoplastisches Elastomer umfassen. Bevorzugt umfasst der polymere Werkstoff des Tragkörpers 2 Polypropylen. Der polymere Werkstoff des Tragkörpers 2 umfasst einen steifigkeitserhöhenden anorganischen und/oder mineralischen Zuschlagsstoff, insbesondere aus Talkum und/oder Kreide und/oder Glasfasern und/oder Kohlefasern und/oder Basaltfasern und/oder Steinwolle und/oder Silicat und/oder Ruß und/oder Bariumsulfat und/oder Titanoxid und/oder Zinksulfid und/oder Zirkoniumsilicat. Die mittlere Dichte des Tragkörpers 2 liegt im Bereich von 0,3 g/cm³ bis 0,9 g/cm³, bevorzugt im Bereich von 0,5 g/cm³ bis 0,85 g/cm³, besonders bevorzugt im Bereich von 0,6 g/cm³ bis 0,75 g/cm³. Der Klemmabschnitt 4 des Tragkörpers 2 weist keine Verstärkungseinlage auf. Der Tragkörper 2 weist eine mittlere Porengröße von 8 µm bis 90 µm, bevorzugt von 18 µm bis 70 µm auf. Der Tragkörper 2 weist einen eingestellten Gradienten, insbesondere in Richtung zur Außenoberfläche 7 des Tragkörpers 2 abnehmenden Gradienten, in der Porenanzahl und/oder in der Porengröße auf. Die Außenoberfläche 7 des Tragkörpers ist durch eine nicht-geschäumte und/oder porenfreie geschlossene Außenhaut 7' gebildet. Das wenigstens eine Dichtungselement 3 ist eine Dichtlippe. Zusätzlich sind innerhalb des U-förmigen oder V-förmigen Klemmabschnitts 3 Klemmlippen 8 vorgesehen. Der Tragkörper 2 und das Dichtungselement 3 sind im Wege der Extrusion, insbesondere Mehrkomponenten-Extrusion hergestellt. Die in den Fig. 1 und Fig. 2 dargestellte Kraftfahrzeugdichtung 1 ist eine Fensterschachtabdeckung. Alternativ kann die Kraftfahrzeugdichtung auch eine Dachfugenleiste, eine Scheibeneinfassung, eine Halteschiene oder ein Fensterführungsprofil sein.

## Patentansprüche

1. Kraftfahrzeugdichtung (1) aufweisend
- einen als Profil ausgebildeten Tragkörper (2) und
- wenigstens ein mit dem Tragkörper (2) verbundenes Dichtungselement (3),
wobei der Tragkörper (2) wenigstens einen im Querschnitt U-förmigen oder V-förmigen Klemmabschnitt (4) aufweist, und wobei der Tragkörper (2) und das Dichtungselement (3) aus polymeren Werkstoffen bestehen,
**dadurch gekennzeichnet, dass**
zumindest der Tragkörper (2) aus einem geschäumten polymeren Werkstoff besteht.

2. Kraftfahrzeugdichtung (1) nach Anspruch 1, **dadurch gekennzeichnet, dass** der geschäumte polymere Werkstoff ein chemisch und/oder physikalisch geschäumter polymerer Werkstoff ist.

3. Kraftfahrzeugdichtung (1) nach Anspruch 1 oder 2, **dadurch gekennzeichnet, dass** der polymere Werkstoff des Tragkörpers (2) und/oder des Dichtungselementes (3) Polypropylen, Polyethylen, Polyvinylchlorid, Polystyrol, Acrylnitril-Butadien-Styrol, Polyamid und/oder ein Thermoplastisches Elastomer umfasst oder umfassen.

4. Kraftfahrzeugdichtung (1) nach einem der vorstehenden Ansprüche, **dadurch gekennzeichnet, dass** der polymere Werkstoff des Tragkörpers (2) einen steifigkeitserhöhenden anorganischen und/oder mineralischen Zuschlagsstoff, insbesondere aus Talkum und/oder Kreide und/oder Glasfasern und/oder Kohlefasern und/oder Basaltfasern und/oder Steinwolle und/oder Silicat und/oder Ruß und/oder Bariumsulfat und/oder Titanoxid und/oder Zinksulfid und/oder Zirkoniumsilicat, umfasst.

5. Kraftfahrzeugdichtung (1) nach einem der vorstehenden Ansprüche, **dadurch gekennzeichnet, dass** die mittlere Dichte des Tragkörpers (2) im Bereich von 0,3 g/cm³ bis 0,9 g/cm³, bevorzugt im Bereich von 0,5 g/cm³ bis 0,85 g/cm³, besonders bevorzugt im Bereich von 0,6 g/cm³ bis 0,75 g/cm³ liegt.

6. Kraftfahrzeugdichtung (1) nach einem der vorstehenden Ansprüche, **dadurch gekennzeichnet, dass** der Klemmabschnitt (4) des Tragkörpers (2) keine Verstärkungseinlage aufweist.

7. Kraftfahrzeugdichtung (1) nach einem der vorstehenden Ansprüche, **dadurch gekennzeichnet, dass** der Tragkörper (2) eine mittlere Porengröße von 8 µm bis 90 µm, bevorzugt von 18 µm bis 70 µm aufweist.

8. Kraftfahrzeugdichtung (1) nach einem der vorstehenden Ansprüche, **dadurch gekennzeichnet, dass** der Tragkörper (2) einen eingestellten Gradienten, insbesondere in Richtung zur Außenoberfläche (7) des Tragkörpers (2) abnehmenden Gradienten, in der Porenanzahl und/oder in der Porengröße aufweist.

9. Kraftfahrzeugdichtung (1) nach einem der vorstehenden Ansprüche, **dadurch gekennzeichnet, dass** die Außenoberfläche (7) des Tragkörpers durch eine nicht-geschäumte und/oder porenfreie geschlossene Außenhaut (7') gebildet ist.

10. Kraftfahrzeugdichtung (1) nach einem der vorstehenden Ansprüche, **dadurch gekennzeichnet, dass** das Dichtungselement (3) eine Dichtlippe ist.

11. Kraftfahrzeugdichtung (1) nach einem der vorstehenden Ansprüche, **dadurch gekennzeichnet, dass** der Tragkörper (2) und das Dichtungselement (3) im Wege der Extrusion, insbesondere Mehrkomponenten-Extrusion hergestellt und/oder verbunden sind.

12. Kraftfahrzeugdichtung (1) nach einem der vorstehenden Ansprüche, **dadurch gekennzeichnet, dass** die Kraftfahrzeugdichtung (1) eine Fensterschachtabdeckung, eine Dachfugenleiste, eine Scheibeneinfassung, eine Halteschiene oder ein Fensterführungsprofil ist.
